# EUROPEAN PATENT SPECIFICATION

(11) **EP 3 574 755 B1**
(45) Date of publication and mention of the grant of the patent: **31.07.2024**
(21) Application number: 19175418.3
(22) Date of filing: 20.05.2019
(51) Int. Cl.: A01M 7/00

(54) **AGRICULTURAL SPRAYER AND METHOD OF DETECTING PLUGGING IN A NOZZLE**
LANDWIRTSCHAFTLICHE FELDSPRITZE UND VERFAHREN ZUR DETEKTION EINER VERSTOPFUNG IN EINER DÜSE
PULVÉRISATEUR AGRICOLE ET PROCÉDÉ DE DÉTECTION D'OBTURATION DANS UNE BUSE

(30) Priority: 24.05.2018 US 201815988186
(43) Date of publication of application: 04.12.2019
(73) Proprietor: Deere & Company, Moline, IL 61265 (US)
(72) Inventor: Bharatiya, Paresh, 68163 Mannheim (DE); Sivaji, Raja, 68163 Mannheim (DE)
(74) Representative: Reichert, Christian

(56) References cited:
- EP-A1- 3 248 463
- DE-A1- 102015 111 889
- US-A- 4 905 897
- US-A1- 2006 265 106

## Description

### FIELD OF THE DESCRIPTION

This invention relates to a spraying apparatus for an agricultural sprayer. More specifically, the invention relates to systems and methods for detecting full or partial plugging of a spray nozzle of an agricultural sprayer.

### BACKGROUND

Agricultural spraying systems are known. Such systems typically include a fluid line or conduit mounted on a foldable, hinged, or retractable and extendible boom. The fluid line is coupled to one or more spray nozzles mounted along the boom. Each spray nozzle is configured to receive the fluid and direct atomized fluid to a crop or field during application.

Spraying operations are generally intended to distribute a product (e.g. fertilizer, pesticides, etc.) evenly over an agricultural surface, such as a field or crop. Properly functioning spray nozzles ensure that dispersal of the product occurs evenly and is important to ensure crop yields.

In order to provide a system to assure properly functioning spray nozzles a field sprayer nozzle monitor has been proposed as disclosed in US 4,905,897. The nozzle monitor comprises a sensor head which is clamped onto the nozzle to transmit sound from the spray nozzle to a microphone. A central processor unit receives signals from each of the sensors in turn and processes those to compare with a predetermined calibration signal to determine which nozzles are blocked or faulty. The selection between two different frequencies can be made for different nozzle types. A dynamic averaging system is used to accommodate changes which take place at all nozzles which are independent of fault at the nozzle. The system requires a relative costly sensor housing and attachment, requires an intricate signal filtration procedure and is highly sensitive on ambient noise.

A further example is disclosed in US2006/0265106 A, disclosing a system and method for controlling operation of a spraying system. The system includes spray nozzles and vibration sensors located adjacent to them. A processor conveys information to an operator regarding the spray nozzles operation based on the sensed vibrations. Also here, the system might be highly sensitive on ambient vibrations and other movements in operation, e.g. caused by unevennesses when moving over agricultural ground.

DE 10 2015 111 889 provides a digital camera based system for monitoring the spray nozzle operation of an agricultural sprayer. The system uses image processing techniques to analyse the spray pattern of said nozzles. Such a system is costly and requires complex analyzing algorithms and calculation efforts. It is further susceptible for dirt, vibration and limited to certain light conditions.

Another similar sprayer with monitoring is disclosed in EP3248463A1.

### SUMMARY

An agricultural sprayer includes at least one nozzle configure to receive a fluid and direct atomized fluid to an agricultural surface in a dispersal area. A radio-frequency (RF) transmitter is disposed to generate an RF signal that passes through the dispersal area. The RF signal is detectably changed when interacting with droplets of the atomized fluid. A first RF receiver is disposed to receive the RF signal after the RF signal passes through the dispersal area and provides an output indicative of the RF signal. A controller is coupled to the first RF receiver and is configured to detect plugging of the at least one nozzle based on the output of the first RF receiver and on comparing attenuation of the received (RF) signal with reference. The at least one nozzle comprises a plurality of nozzles, and the sprayer further comprises a second RF receiver, wherein the first RF receiver is disposed to receive the RF signal after passing through the dispersal area of a first nozzle of the plurality of nozzles, and the second RF receiver is disposed to receive the RF signal after passing through the dispersal area of a second nozzle of the plurality of nozzles. The controller is configured to detect plugging by comparing the output of the first RF receiver to an output of the second RF receiver.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 illustrates an agricultural field sprayer with which embodiments described herein are particularly useful.
FIGS. 2A-2C illustrate example spray patterns from spray nozzles within a spray system.
FIGS. 3A and 3B illustrate systems for detecting spray nozzle plugging in accordance with an embodiment of the present invention.
FIGS. 4A and 4B illustrate a multi-nozzle system employing RF-based plugging detection in accordance with an embodiment of the present invention.
FIGS. 5A and 5B illustrate a multi-nozzle system employing RF-based plugging detection in accordance with another embodiment of the present invention.
FIG. 6 is a flow diagram of a method of detecting a plugged nozzle using RF transmissions in accordance with an embodiment of the present invention.
FIG.7 illustrates an environment in which embodiments described herein are particularly useful.

### DETAILED DESCRIPTION

Embodiments described herein generally employ radio-frequency (RF) transmissions to detect a change in output from one or more nozzles. As the radio-frequency energy of the transmission passes through the droplets of a spray nozzle, the RF signal is changed in a detectable way. An RF receiver, configured to detect the RF signal that has passed through the spray, provides an output that is monitored to provide spray nozzle diagnostic indications. As used herein, radio-frequency (RF) is defined to mean electromagnetic energy having a frequency in the range from about 3kHz to 300 GHz.

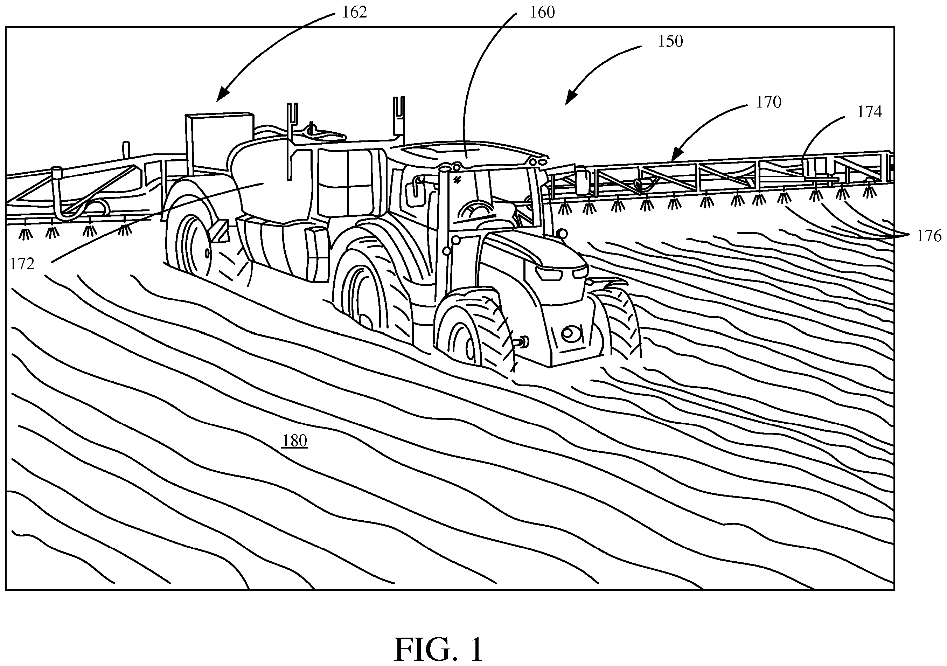

FIG. 1 illustrates an agricultural field sprayer with which embodiments described herein are particularly useful. FIG. 1 illustrates an agricultural environment 150 in which a tractor 160 is coupled to, and pulls, a towed sprayer 162. Towed sprayer 162 includes spray system 170, which has a tank 172 containing a liquid that is being applied to field 180. Tank 172 is coupled to boom 174, and the product is delivered to spray nozzles 176, which are spaced apart along boom 174. It is important, in environment 150, that product is evenly distributed across field 180. For example, if fertilizer is unevenly applied, it is wasted in areas of over-application, and areas of under-application can see reduced yields.

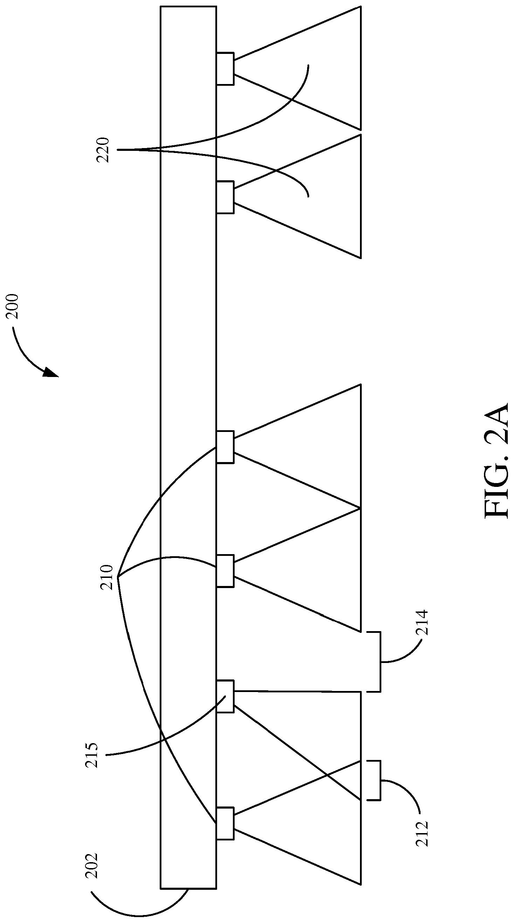

FIGS. 2A-2C illustrate example spray patterns from spray nozzles within a spray system. FIG. 2A is a diagrammatic representation of an example spray system 200 having a number of spray nozzles 210 spaced apart along boom 202. Each spray nozzle 210 generates a dispersal 220 of sprayed or otherwise atomized product. As illustrated in FIG. 2A, spray nozzle 215 is at least partially plugged, creating an overlap area 212, where distributed product is overapplied, and an uncovered area 214, where no product is applied.

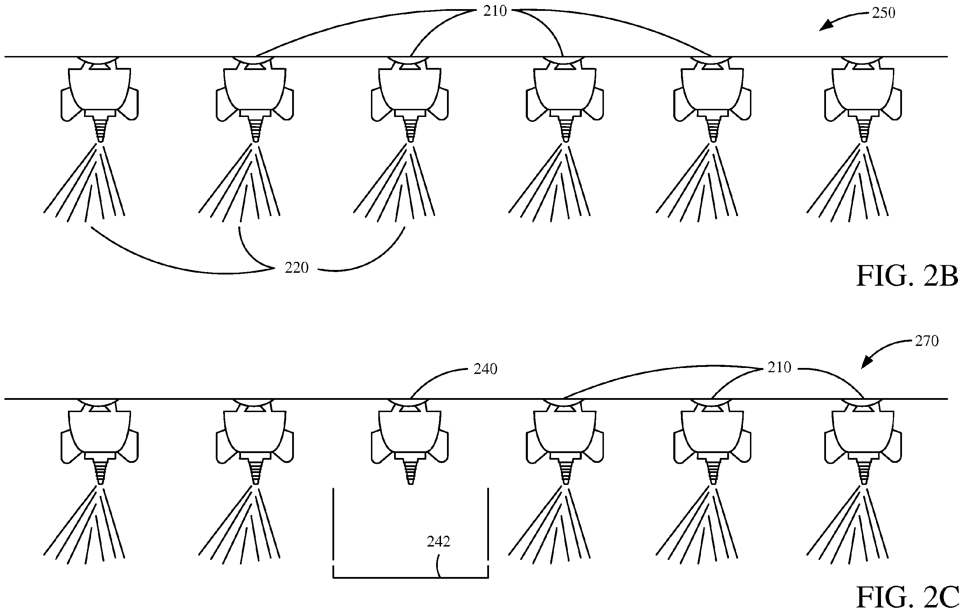

FIGS. 2B and 2C illustrate a contrast between a properly functioning spray system 250 and a spray system 270 that has a plugged spray nozzle 240. As illustrated in FIG. 2C, because spray nozzle 240 is fully plugged, area 242 will receive no dispersed product. This can result in lower yield for the portion of the field covered by area 242. Additionally, a plugged spray nozzle also impacts the spray quality as the target application rate is not achieved for a portion of the field.

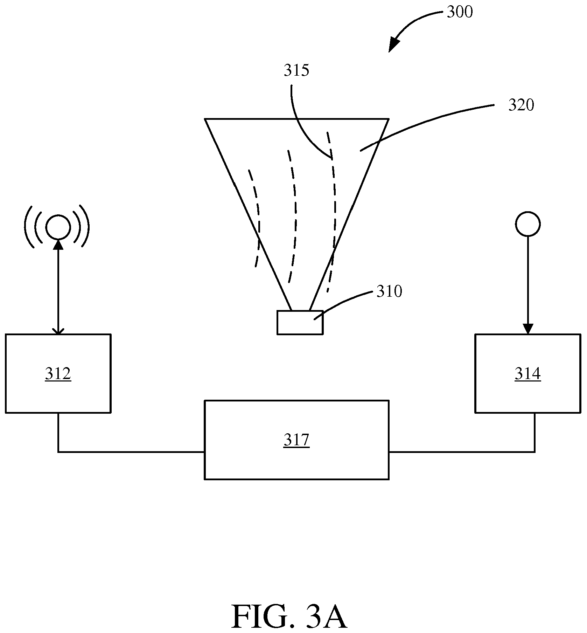

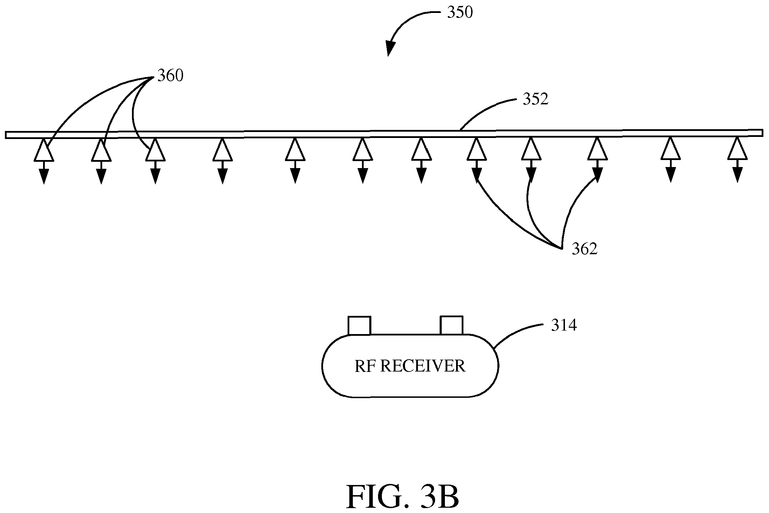

FIGS. 3A and 3B illustrate systems for detecting spray nozzle plugging in accordance with an embodiment of the present invention. FIG. 3A is a diagrammatic view of RF-based plugged nozzle detection in accordance with one embodiment. Nozzle 310, when functioning properly, emits product in a predictable dispersal pattern 320. An RF transmission 315, sent from signal transmitter 312, passes through dispersal pattern 320, and is detected by RF signal detector 314. The RF signal 315 is detectably changed as it passes through dispersal pattern 320. This detectable change is generally a change in the attenuation of the signal. Thus, controller 317 coupled to transmitter 312 and receiver 314, can detect a change in the received signal by monitoring one or more characteristics of the RF signal (such as amplitude) using receiver 314. In this way, controller 317 detects changes indicative of plugging and provides a useful ability to diagnose, and/or correct, a plugged nozzle quickly. Controller 317 can be any suitable logic or circuit arrangements that are able to receive an output signal from receiver 314 and analyze the output to detect partial or full nozzle plugging. In one embodiment, controller 317 is a microprocessor. Controller 317 may be separate from each of transmitter 312 and receiver 314 or it may be combined with either of transmitter 312 or receiver 314. Advantageously, the techniques described herein employ RF energy to detect spray nozzle plugging and this do not employ optical techniques, which can be distorted or otherwise affected by dirt, dust, darkness or other variables.

One example of electromagnetic energy being affected by passing through droplets of liquid is known as rain fade. Rain fade describes the attenuation of the RF signal as it passes through and is at least partially absorbed by atmospheric snow, ice or rain. Rain fade is particularly evident at RF frequencies above 11 GHz and is typically a quantity that is compensated for in electromagnetic transmissions. One particularly useful range of RF signals for embodiments described herein is a frequency range from about 7 GHz to about 55 GHz.

FIG. 3B illustrates a spray system 350 for a plurality of nozzles 360 mounted on boom 352. In the illustrated example, each nozzle 360 is paired with an RF signal transmitter (not shown) that emits a signal 362. In one example, each transmitter transmits a signal of the same amplitude but with a different frequency to that the RF receiver can differentiate the various signals. The RF transmitters can be positioned close to each of nozzles 360, such that each RF signal will pass through the dispersal pattern of its respective nozzle and be received by RF signal receiver 314. For example, the signal transmitters can be placed next to each nozzle 360, as well as above or below each nozzle 360 as long as the RF signal passes through the dispersal pattern of the respective nozzle. Thus, the signal transmitters can be mounted directly to boom 352, or to each of nozzles 360, or in other appropriate locations.

In one embodiment, RF receiver 314 is configured to substantially simultaneously receive RF signals relative to each of nozzles 360. However, it is also contemplated that RF receiver 314 may be configured to alternatively receive and analyze incoming RF signals relative to each nozzle 360 sequentially. The system, thus is able to provide a substantially real-time indication of the current efficacy of each nozzle during operation.

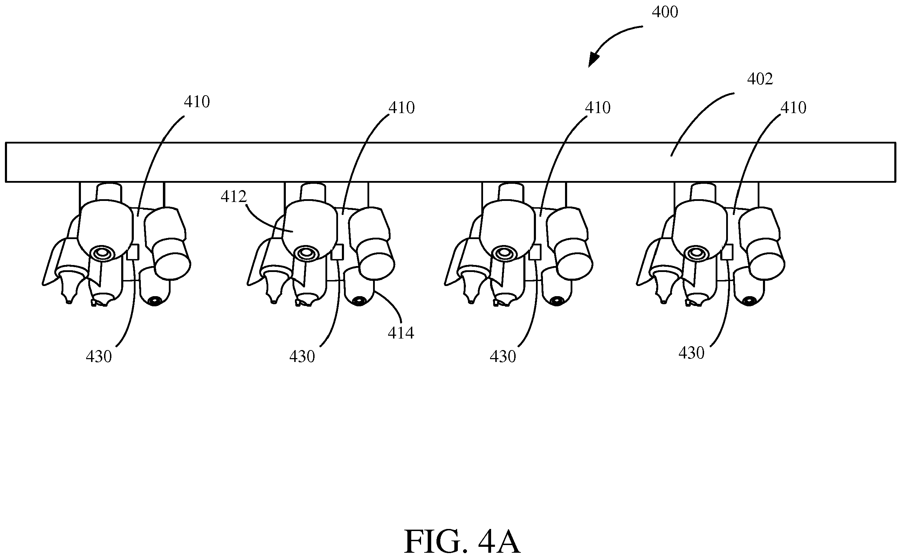

FIG. 4A illustrates a multi-nozzle spray system employing RF-based plugging detection in accordance with an embodiment of the present invention. System 400 includes a boom 402 coupled to a plurality of multi-nozzle bodies 410. In one example, multi-nozzle bodies 410 are used to deliver effective coverage over more area in less time. Using multiple nozzles allow an increase in productivity by better tolerating changes in spray speed. The group of nozzles can be used to deliver a single product at varying rates depending on how many individual nozzles are engaged. Additionally, the utilization of various nozzles can provide better placement precision of the product. In one example, multi-nozzle bodies 410 are those sold in relation to the trade designation ExactApply^{™} Nozzle Control, available from John Deere Corporation, of Moline, Illinois.

As shown, each multi-nozzle body 410 is configured to mount a plurality of spray nozzles, such as first nozzle 412 and a second nozzle 414. First nozzle 412 and second nozzle 414 are diametrically opposite one another on multi-nozzle body 410. As illustrated in FIG. 4A, a multi-nozzle body 410 can be coupled to more than two nozzles; for example 4A shows five nozzles for each multi-nozzle body 410. Each multi-nozzle body 410 also includes, or is coupled to, an RF transmitter 430 that is configured to emit an RF signal. In one example, the RF signal is omnidirectional emanating outwardly from the center of multi-nozzle body 410. As can be appreciated, the RF signal will pass through the dispersal patterns of any individual nozzles that are engaged. The RF signal passing through the droplets of each dispersal pattern will be attenuated, or otherwise affected. An RF receiver positioned to detect the RF signal after passing through such a dispersal pattern is then used to detect whether a particular nozzle's pattern has changed.

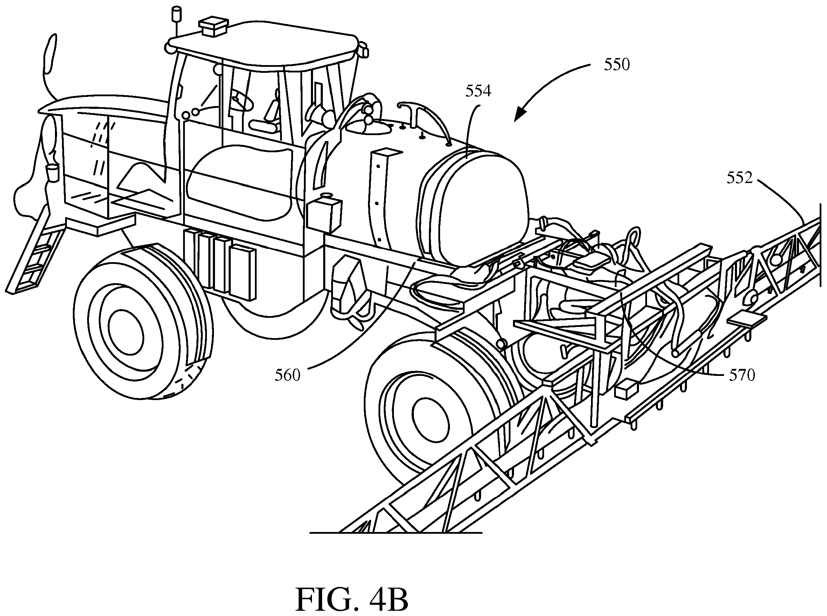

FIG. 4B illustrates an agricultural sprayer 550 with a pair of RF receivers 560, 570 to receive RF signals relative to multiple individual nozzles of a multi-nozzle body 410 in accordance with an embodiment of the present invention. As illustrated in FIG. 4B, first RF receiver 560 is mounted near solution tank 554, and second RF receiver 570 is located on the back side of a boom 552. Both first and second receivers 560, 570, receive the same signal from each multi-nozzle body RF transmitter 430. However, the signal received by first RF receiver 560 will be attenuated by the nozzle 412 (shown in FIG. 4A) while the signal received by second RF receiver 570 will be attenuated by nozzle 414 (shown in FIG. 4A). First and second receivers 560, 570 are coupled to a suitable controller, such as a controller of the agricultural machine, which analyzes the received signals to provide a plugging indication relative to the various nozzles, such as nozzles 412, and 414. This analysis may be as simple as merely comparing the two signals, such that any difference between the two signals can be used to indicate which nozzle of the pair of nozzles is plugged, either partially or fully.

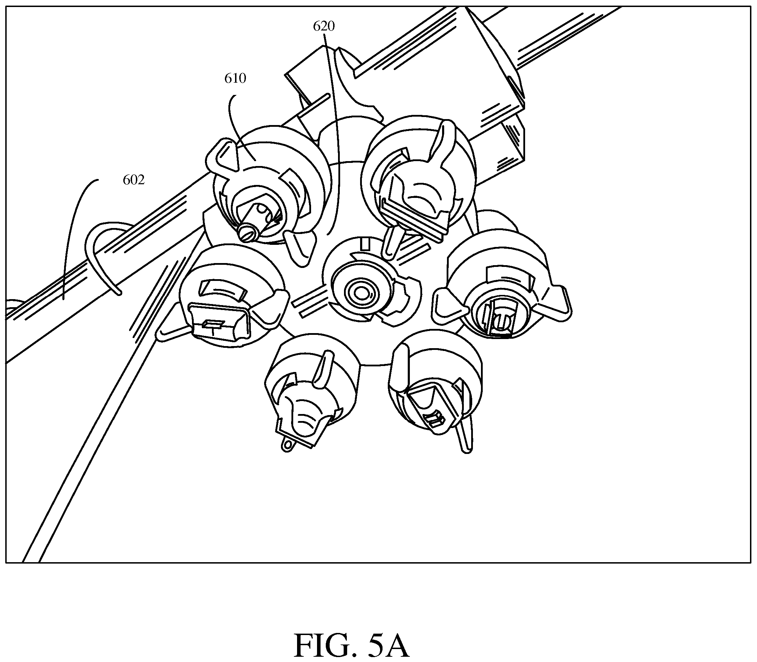

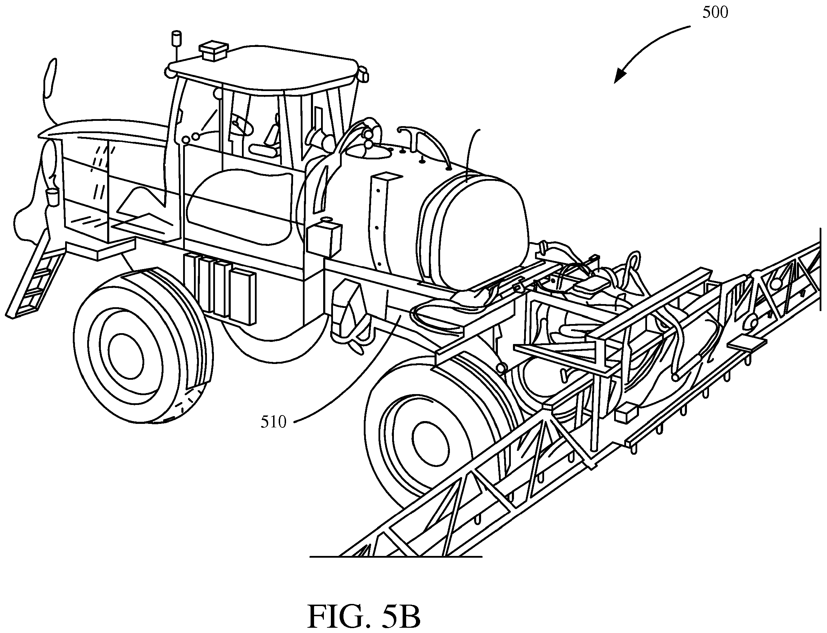

FIGS. 5A and 5B illustrate a multi-nozzle system employing RF-based plugging detection in accordance with another embodiment of the present invention. FIG. 5A is a bottom view of a multi-nozzle body having a plurality of individual RF transmitters, where each individual nozzle 610 of the multi-nozzle assembly has an associated RF transmitter 620. When only a subset set of nozzles 610 is active (for example, one pair of nozzles 610), only a subset of the associated transmitters 620 are also active. The RF signal transmitted by each RF transmitter 620 is attenuated by surrounding spray nozzles 610.

In embodiments where multiple RF transmitters 620 are used, any suitable technique for disambiguating the signals can be employed. For example, one RF transmitter 620 may operate in a first frequency range, while another RF transmitter 620 may operate in a second frequency range that does not overlap the first frequency range. Additionally, or alternatively, the different RF transmitters 620 may provide different modulation of their respective RF signals. Further still, the different RF transmitters 620 may be operated in sequence such that only a single RF transmitter 620 is operating at any given time.

FIG. 5B illustrates an agricultural sprayer 500 with RF receiver 510 mounted proximate a solution tank and configured to detect signals from the various RF transmitters 620 (shown in FIG. 5A). In one embodiment, a controller coupled to RF receiver 510 is configured to compare data from each nozzle with default data stored in the controller, or in another suitable location, that indicates normal nozzle operation. Based on the comparison to the default data, the controller can determine if a particular nozzle or pair of nozzles has partial or full plugging.

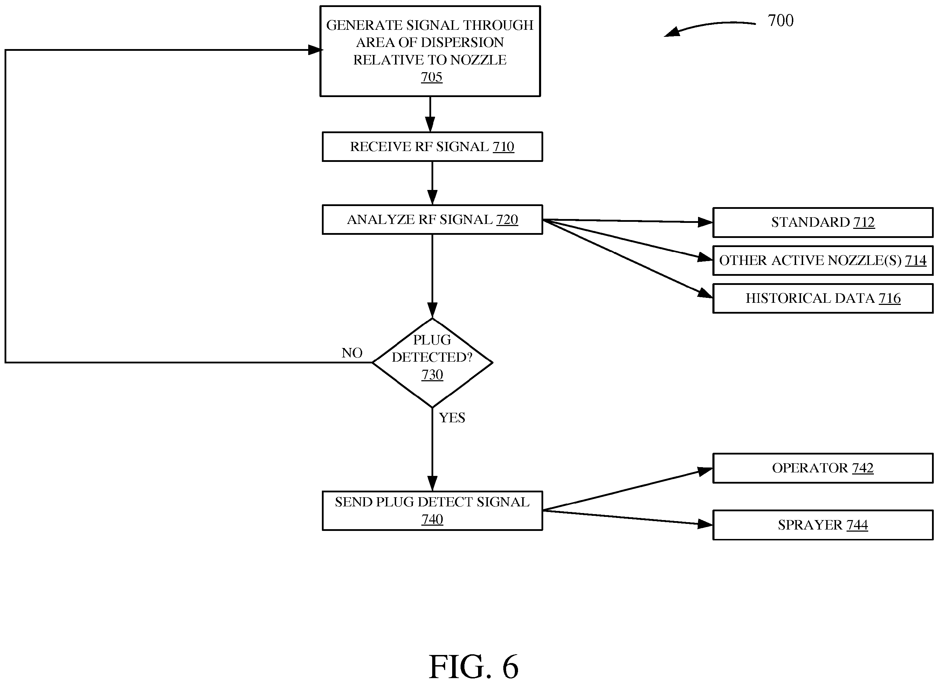

FIG. 6 illustrates a flow diagram of a method of detecting a plugged spray nozzle in accordance with an embodiment of the present invention. Method 700 can be used to detect a partial or fully plugged status of a nozzle on an agricultural sprayer. Method 700 can also be used with at least some of the single and multi-nozzle systems described herein.

Method 700 begins at block 705 where an RF signal is generated and passes through a dispersal area of at least one nozzle.

At block 710, the RF signal is received using an RF receiver, such as receiver 510. Next, at block 720, the received RF signal is analyzed. Analyzing the received RF signal, can include comparing the signal with a standard signal obtained and stored during known-good spraying conditions, as indicated in block 712. The standard can include a manufacturer-provided range of acceptable RF signals, or an indication of RF signals that indicate partial or complete plugging. Analyzing the received RF signal can additionally or alternatively include comparing the received signal with one or more received signals relative to other nozzles, as indicated in block 714. For example, using an average of a set of received RF signals can indicate that one or more nozzles in a set of nozzles is plugged, for example because the RF signal received from the plugged nozzle is different from the average in a statistically significant way. Historical data for a nozzle can also be used to detect full or partial plugging, as indicated in block 716. For example, a received RF signal will change as plugging is experienced, and the RF signal travels through a thinner, or non-existent spray.

At block 730, if a partial or fully plugged sensor is detected, method 700 proceeds to block 740 where an indication of plugging is provided. However, in the event that no plugging is detected for a particular nozzle, method 700 returns to block 705, and thus repeats.

At block 740, an indication of a plugged nozzle status is generated and sent. For example, an indication can be sent directly to an operator, as indicated in block 742, for example as an audible or visual alert. Additionally, or alternatively, a notification can be provided to an operator's device, such as a mobile phone. The indication can also be sent directly to the agricultural sprayer, as indicated in block 744, for remedial action, such as automatically switching to a different pair of active nozzles in a multi-nozzle assembly.

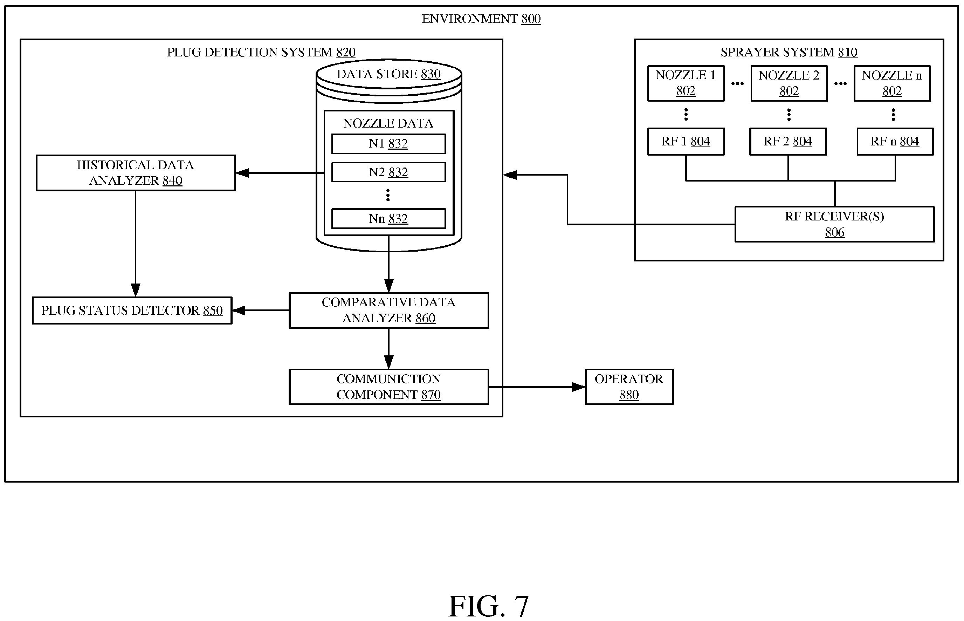

FIG. 7 illustrates an environment in which embodiments of the present invention are particularly useful. Sprayer system 810 is located within environment 800, and may be mounted to an agricultural vehicle, or towed by an agricultural vehicle, as illustrated in FIG. 1. Sprayer system 810 has one or more nozzles 802, either mounted directly to a boom, or to a nozzle body. Each nozzle 802 is associated with an RF transmitter 804. The signals generated by RF transmitter(s) 804 are configured to pass through respective dispersal areas of respective nozzles 802 and be attenuated or otherwise distorted by droplets of liquid in the dispersal area. The distorted RF signal is then detected by an RF receiver 806. Sprayer system 810 may include a single RF receiver 806 (such as described above with respect to FIGS. 5A and 5B) configured to receive signals alternatively from different RF transmitters 804 or sprayer system 810 may employ two or more RF receivers 806 (such as described above with respect to FIGS. 4A and 4B).

Environment 800 also includes an RF-based plug detection system 820, which may be located locally, for example as part of a computing unit within an agricultural vehicle, or remotely from an agricultural vehicle, for example within a separate computing system. RF-based plug detection system 820 includes storage component 830, which stores nozzle data 832, obtained from a plurality of nozzles 802, for example. Nozzle data 832 can be analyzed to detect a partial or completely plugged status within a nozzle 802. For example, historical data analyzer 840 can compare contemporaneously received nozzle data for a nozzle 802 to historical nozzle data 832 and detect a statistically significant difference. Additionally, comparative data analyzer 860 can compare nozzle data 832 from a single nozzle, to a known-good standard. For example, the known-good standard can include an average of contemporaneously received data 832 from all nozzles 802. Additionally, the known-good standard can include a standard provided from a manufacturer.

Based on a comparison, for example from historical data analyzer 840 or comparative data analyzer 860, plug status detector 850 detects that a nozzle 802 is experiencing partial or complete plugging, and generates a plugging indication. The plugging indication is then transmitted by communication component 870 to an operator 880, for example through a display on the agricultural vehicle, or through a display on a device associated with operator 880.

Also, the figures show a number of blocks with functionality ascribed to each block. It will be noted that fewer blocks can be used so the functionality is performed by fewer components. Also, more blocks can be used with the functionality distributed among more components.

## Claims

1. An agricultural sprayer (162), comprising:
at least one nozzle (176, 210, 215, 310, 360, 412, 414, 610, 802) configured to receive a fluid and direct atomized fluid to an agricultural surface (180); **characterized in that**
a radio-frequency (RF) transmitter (312, 430, 620, 804) is disposed to generate an RF signal (315) that passes through a dispersal area (350), wherein the RF signal (315) is detectably changed when interacting with droplets of the atomized fluid;
a first RF receiver (314, 510, 560, 570) is disposed to receive the RF signal (315) after the RF signal (315) passes through the dispersal area (320), the first RF receiver (314) providing an output indicative of the RF signal (315); and
a controller (317) is coupled to the first RF receiver (314, 510, 560, 570) and configured to detect plugging of the at least one nozzle (210) based on the output of the first RF receiver (314, 510, 560, 570) and on comparing attenuation of the received (RF) signal (315) with reference,
wherein the at least one nozzle (176, 210, 215, 310, 360, 412, 414, 610, 802) comprises a plurality of nozzles,
the sprayer (162) further comprising a second RF receiver (314, 510, 560, 570), wherein the first RF receiver (314, 510, 560, 570) is disposed to receive the RF signal (315) after passing through the dispersal area (320) of a first nozzle (176, 210, 215, 310, 360, 412, 414, 610, 802) of the plurality of nozzles, and the second RF receiver (314, 510, 560, 570) is disposed to receive the RF signal (315) after passing through the dispersal area (320) of a second nozzle (176, 210, 215, 310, 360, 412, 414, 610, 802) of the plurality of nozzles and
wherein the controller (317) is configured to detect plugging by comparing the output of the first RF receiver (314, 510, 560, 570) to an output of the second RF receiver (314, 510, 560, 570).

2. The agricultural sprayer of claim 1, wherein the controller (317) is configured to detect plugging by comparing the output of the first RF receiver (314, 510, 560, 570) to data selected from the group consisting of default data, historical data, and information about all nozzles (176, 210, 215, 310, 360, 412, 414, 610, 802).

3. The agricultural sprayer of claim 1 or 2, wherein the plurality of nozzles are part of a multi-nozzle body (410).

4. The agricultural sprayer of one of the claims 1 to 3, and further comprising a plurality of multi-nozzle bodies (410).

5. The agricultural sprayer of claim 3 or 4, wherein the first and second nozzles (176, 210, 215, 310, 360, 412, 414, 610, 802) are disposed diametrically opposite one another on the multi-nozzle body (410).

6. The agricultural sprayer of one of the claims 1 to 5, wherein the nozzles (176, 210, 215, 310, 360, 412, 414, 610, 802) are spaced apart along a boom (174, 202, 352, 402, 552).

7. The agricultural sprayer of one of the claims 1 to 6, wherein the controller (317) is configured to provide an indication of plugging based on the detection, wherein the indication is selected from the group consisting of an audible indication, a visual indication, an LED indication, and a mobile indication.

8. The agricultural sprayer of one of the claims 1 to 7, wherein the controller (317) is configured to engage a different nozzle (176, 210, 215, 310, 360, 412, 414, 610, 802) based on the detection.

9. The agricultural sprayer of one of the claims 1 to 8, wherein the RF signal (315) has a frequency in the range from about 7 GHz to about 55 GHz.

10. A method of detecting plugging in a nozzle (176, 210, 215, 310, 360, 412, 414, 610, 802) of an agricultural sprayer of claim 1, the method comprising:
generating (705) a radio-frequency signal (315) that passes through a dispersal area (320) of the nozzle (176, 210, 215, 310, 360, 412, 414, 610, 802);
receiving (710) the radio-frequency signal (315) after the radio-frequency signal passes through the dispersal area (320) of the nozzle (176, 210, 215, 310, 360, 412, 414, 610, 802) and comparing attenuation of the received signal with a reference; and
generating an indication (740) of plugging based on the comparison.

11. The method of claim 10, wherein the reference is a radio-frequency signal that passes through a dispersal area (320) of a different nozzle (176, 210, 215, 310, 360, 412, 414, 610, 802).

12. The method of claim 10 or 11, wherein the reference is a standard signal obtained and stored during a known-good spraying condition.

## Patentansprüche

1. Landwirtschaftliche Feldspritze (162), umfassend:
mindestens eine Düse (176, 210, 215, 310, 360, 412, 414, 610, 802), die so ausgelegt ist, dass sie eine Flüssigkeit empfängt und zerstäubte Flüssigkeit auf eine landwirtschaftliche Oberfläche (180) richtet; **dadurch gekennzeichnet, dass**
ein Hochfrequenzsender (HF-Sender) (312, 430, 620, 804) angeordnet ist, um ein HF-Signal (315) zu erzeugen, das durch einen Streubereich (350) durchtritt, wobei das HF-Signal (315) nachweisbar verändert wird, wenn es mit Tröpfchen der zerstäubten Flüssigkeit interagiert;
ein erster HF-Empfänger (314, 510, 560, 570) angeordnet ist, um das HF-Signal (315) zu empfangen, nachdem das HF-Signal (315) durch den Streubereich (320) durchgetreten ist, wobei der erste HF-Empfänger (314) eine Ausgabe bereitstellt, die das HF-Signal (315) anzeigt; und
eine Steuerung (317) mit dem ersten HF-Empfänger (314, 510, 560, 570) gekoppelt und so ausgelegt ist, dass sie eine Verstopfung der mindestens einen Düse (210) basierend auf der Ausgabe des ersten HF-Empfängers (314, 510, 560, 570) und bei Vergleich einer Dämpfung des empfangenen (HF-)Signals (315) mit einer Referenz erkennt,
wobei die mindestens eine Düse (176, 210, 215, 310, 360, 412, 414, 610, 802) eine Mehrzahl von Düsen umfasst,
die Feldspritze (162) ferner einen zweiten HF-Empfänger (314, 510, 560, 570) umfasst, wobei der erste HF-Empfänger (314, 510, 560, 570) angeordnet ist, um das HF-Signal (315) zu empfangen, nachdem es durch den Streubereich (320) einer ersten Düse (176, 210, 215, 310, 360, 412, 414, 610, 802) der Mehrzahl von Düsen durchgetreten ist, und der zweite HF-Empfänger (314, 510, 560, 570) angeordnet ist, um das HF-Signal (315) zu empfangen, nachdem es durch den Streubereich (320) einer zweiten Düse (176, 210, 215, 310, 360, 412, 414, 610, 802) der Mehrzahl von Düsen durchgetreten ist, und
wobei die Steuerung (317) so ausgelegt ist, dass sie die Verstopfung erkennt, indem sie die Ausgabe des ersten HF-Empfängers (314, 510, 560, 570) mit einer Ausgabe des zweiten HF-Empfängers (314, 510, 560, 570) vergleicht.

2. Landwirtschaftliche Feldspritze nach Anspruch 1, wobei die Steuerung (317) so ausgelegt ist, dass sie Verstopfung erkennt, indem sie die Ausgabe des ersten HF-Empfängers (314, 510, 560, 570) mit Daten vergleicht, die aus einer Gruppe ausgewählt sind, die aus Standarddaten, historischen Daten und Informationen über alle Düsen (176, 210, 215, 310, 360, 412, 414, 610, 802) besteht.

3. Landwirtschaftliche Feldspritze nach Anspruch 1 oder 2, wobei die Mehrzahl von Düsen Teil eines Mehrdüsenkörpers (410) ist.

4. Landwirtschaftliche Feldspritze nach einem der Ansprüche 1 bis 3 und ferner umfassend eine Mehrzahl von Mehrdüsenkörpern (410).

5. Landwirtschaftliche Feldspritze nach Anspruch 3 oder 4, wobei die erste und die zweite Düse (176, 210, 215, 310, 360, 412, 414, 610, 802) einander diametral gegenüberliegend auf dem Mehrdüsenkörper (410) angeordnet sind.

6. Landwirtschaftliche Feldspritze nach einem der Ansprüche 1 bis 5, wobei die Düsen (176, 210, 215, 310, 360, 412, 414, 610, 802) entlang eines Schwenkarms (174, 202, 352, 402, 552) voneinander beabstandet sind.

7. Landwirtschaftliche Feldspritze nach einem der Ansprüche 1 bis 6, wobei die Steuerung (317) so konfiguriert ist, dass sie eine Anzeige der Verstopfung basierend auf der Erkennung bereitstellt, wobei die Anzeige aus der Gruppe ausgewählt ist, die aus einer akustischen Anzeige, einer optischen Anzeige, einer LED-Anzeige und einer mobilen Anzeige besteht.

8. Landwirtschaftliche Feldspritze nach einem der Ansprüche 1 bis 7, wobei die Steuerung (317) so ausgelegt ist, dass sie basierend auf der Erkennung eine andere Düse (176, 210, 215, 310, 360, 412, 414, 610, 802) aktiviert.

9. Landwirtschaftliche Feldspritze nach einem der Ansprüche 1 bis 8, wobei das HF-Signal (315) eine Frequenz im Bereich von etwa 7 GHz bis etwa 55 GHz aufweist.

10. Verfahren zur Erkennung einer Verstopfung einer Düse (176, 210, 215, 310, 360, 412, 414, 610, 802) einer landwirtschaftlichen Feldspritze nach Anspruch 1, wobei das Verfahren umfasst:
Erzeugen (705) eines Hochfrequenzsignals (315), das durch einen Streubereich (320) der Düse (176, 210, 215, 310, 360, 412, 414, 610, 802) durchtritt;
Empfangen (710) des Hochfrequenzsignals (315), nachdem es durch den Streubereich (320) der Düse (176, 210, 215, 310, 360, 412, 414, 610, 802) durchgetreten ist, und Vergleichen einer Dämpfung des empfangenen Signals mit einer Referenz; und
Erzeugen einer Anzeige (740) der Verstopfung basierend auf dem Vergleich.

11. Verfahren nach Anspruch 10, wobei die Referenz ein Hochfrequenzsignal ist, das durch einen Streubereich (320) einer anderen Düse (176, 210, 215, 310, 360, 412, 414, 610, 802) durchtritt.

12. Verfahren nach Anspruch 10 oder 11, wobei die Referenz ein Standardsignal ist, das während bekannt guter Sprühbedingungen erhalten und gespeichert wird.

## Revendications

1. Pulvérisateur agricole (162) comprenant :
au moins une buse (176, 210, 215, 310, 360, 412, 414, 610, 802) configurée pour recevoir un liquide et diriger le liquide atomisé vers une surface agricole (180) ;
**caractérisé en ce que** :
un émetteur radiofréquence (RF) (312, 430, 620, 804) est disposé de manière à générer un signal RF (315) qui traverse une zone de dispersion (350), le signal RF (315) étant modifié de manière détectable lorsqu'il interagit avec les gouttelettes du liquide atomisé ;
un premier récepteur RF (314, 510, 560, 570) est disposé pour recevoir le signal RF (315) après que le signal RF (315) a traversé la zone de dispersion (320), le premier récepteur RF (314) fournissant une sortie indicative du signal RF (315) ; et
un contrôleur (317) est couplé au premier récepteur RF (314, 510, 560, 570) et configuré pour détecter le bouchage d'au moins une buse (210) sur la base de la sortie du premier récepteur RF (314, 510, 560, 570) et de la comparaison de l'atténuation du signal (RF) reçu (315) avec la référence,
dans lequel l'au moins une buse (176, 210, 215, 310, 360, 412, 414, 610, 802) comprend une pluralité de buses,
le pulvérisateur (162) comprenant en outre un deuxième récepteur RF (314, 510, 560, 570), le premier récepteur RF (314, 510, 560, 570) étant disposé pour recevoir le signal RF (315) après avoir traversé la zone de dispersion (320) d'une première buse (176, 210, 215, 310, 360, 412, 414, 610, 802) de la pluralité de buses, et le deuxième récepteur RF (314, 510, 560, 570) étant disposé pour recevoir le signal RF (315) après avoir traversé la zone de dispersion (320) d'une deuxième buse (176, 210, 215, 310, 360, 412, 414, 610, 802) de la pluralité de buses, et
dans lequel le contrôleur (317) est configuré pour détecter le bouchage en comparant la sortie du premier récepteur RF (314, 510, 560, 570) à une sortie du deuxième récepteur RF (314, 510, 560, 570).

2. Pulvérisateur agricole selon la revendication 1, dans lequel le contrôleur (317) est configuré pour détecter le bouchage en comparant la sortie du premier récepteur RF (314, 510, 560, 570) à des données sélectionnées dans le groupe constitué de données par défaut, de données historiques et d'informations sur toutes les buses (176, 210, 215, 310, 360, 412, 414, 610, 802) .

3. Pulvérisateur agricole selon la revendication 1 ou la revendication 2, dans lequel la pluralité de buses font partie d'un corps à buses multiples (410).

4. Pulvérisateur agricole selon l'une des revendications 1 à 3, comprenant en outre une pluralité de corps à buses multiples (410).

5. Pulvérisateur agricole selon la revendication 3 ou la revendication 4, dans lequel les première et deuxième buses (176, 210, 215, 310, 360, 412, 414, 610, 802) sont disposées diamétralement opposées l'une à l'autre sur le corps à buses multiples (410).

6. Pulvérisateur agricole selon l'une des revendications 1 à 5, dans lequel les buses (176, 210, 215, 310, 360, 412, 414, 610, 802) sont espacées les unes des autres le long d'une rampe (174, 202, 352, 402, 552).

7. Pulvérisateur agricole selon l'une des revendications 1 à 6, dans lequel le contrôleur (317) est configuré pour fournir une indication de bouchage sur la base de la détection, dans lequel l'indication est sélectionnée dans le groupe constitué d'une indication sonore, d'une indication visuelle, d'une indication par LED et d'une indication mobile.

8. Pulvérisateur agricole selon l'une des revendications 1 à 7, dans lequel le contrôleur (317) est configuré pour engager une buse différente (176, 210, 215, 310, 360, 412, 414, 610, 802) en fonction de la détection.

9. Pulvérisateur agricole selon l'une des revendications 1 à 8, dans lequel le signal RF (315) a une fréquence comprise dans une plage s'étendant d'environ 7 GHz à environ 55 GHz.

10. Procédé de détection d'un bouchage dans une buse (176, 210, 215, 310, 360, 412, 414, 610, 802) d'un pulvérisateur agricole selon la revendication 1, le procédé comprenant les étapes suivantes :
générer (705) un signal radiofréquence (315) qui traverse une zone de dispersion (320) de la buse (176, 210, 215, 310, 360, 412, 414, 610, 802) ;
recevoir (710) le signal radiofréquence (315) après que le signal radiofréquence a traversé la zone de dispersion (320) de la buse (176, 210, 215, 310, 360, 412, 414, 610, 802), et comparer l'atténuation du signal reçu avec une référence ; et
générer une indication (740) de bouchage sur la base de la comparaison.

11. Procédé selon la revendication 10, dans lequel la référence est un signal radiofréquence qui traverse une zone de dispersion (320) d'une buse différente (176, 210, 215, 310, 360, 412, 414, 610, 802) .

12. Procédé selon la revendication 10 ou la revendication 11, dans lequel la référence est un signal standard obtenu et stocké pendant des conditions de pulvérisation de qualité connue.
